# EUROPEAN PATENT SPECIFICATION

(11) **EP 1 442 946 B1**
(45) Date of publication and mention of the grant of the patent: **26.09.2007**
(21) Application number: 04001968.9
(22) Date of filing: 29.01.2004
(51) Int. Cl.: B60R 21/20, B60R 21/16

(54) **Airbag device, use thereof and seat provided therewith**
Gassack, dessen Anwendung sowie damit versehener Sitz
Sac gonflable, sa utilisation et siege équipée d'un tel sac gonflable

(30) Priority: 29.01.2003 JP 2003019792; 20.02.2003 JP 2003042368; 24.02.2003 JP 2003045849
(43) Date of publication of application: 04.08.2004
(73) Proprietor: Mazda Motor Corporation, Aki-gun, Hiroshima 730-8670 (JP)
(72) Inventor: Nishikaji, Satoshi, Aki-gun Hiroshima 730-8670 (JP); Ishigame, Katsuyoshi, Aki-gun Hiroshima 730-8670 (JP); Sugawara, Tsutomu, Aki-gun Hiroshima 730-8670 (JP); Taguchi, Seigo, Aki-gun Hiroshima 730-8670 (JP)
(74) Representative: Müller-Boré & Partner Patentanwälte

(56) References cited:
- EP-A- 0 999 101
- WO-A-02/100690
- DE-A- 19 646 698
- US-A- 5 556 128
- US-A- 5 913 536
- US-A- 6 065 772

## Description

The present invention relates to an airbag device for a vehicle which functions in the event of a side impact of the vehicle, to a use thereof and to a seat equipped therewith.

Recently, many vehicles have been equipped with, so-called, a side airbag device for protecting an occupant properly in a side impact of the vehicle. This kind of airbag device comprises an inflatable airbag mounted within a seat back of a seat for the occupant and arranged to inflate forward and between the occupant and a vehicle side body in the side impact of the vehicle.

A certain type of the inflatable airbag inflated between the occupant and the vehicle side body in the side impact of the vehicle has a large volume so as to be located over the occupant's head and chest. For instance, Japanese Patent Laid-Open Publication No. 9-136600 discloses an inflated airbag extending in a vertical direction of the vehicle as a whole, having a first portion which is located below thereof and at a side of an occupant's chest and a second portion which is located above thereof and at a side of an occupant's head. The airbag is formed as one unit inflatable bag and a partition for forming the above-described first and second portions is provided inside of the airbag. The partition is configured so as to be broken in the event of the inflation of the airbag.

Further, Japanese Patent Laid-Open Publication No. 9-220993 discloses an inflatable airbag which is formed as one unit airbag as a whole but comprises an upper portion located at the side of the occupant's head and a lower portion located at the side of the occupant's chest in an inflated condition. Herein, the upper portion and the lower portion are connected with each other through a rear portion located reward of the airbag having a small cross-section area. Namely, the airbag disclosed herein has a shape with a forward-opening portion at the middle thereof.

Herein, it is needed that the inflated airbag between the occupant and the vehicle side body is located securely at the side of the occupant's head and chest. However, it may be difficult actually that the inflated airbag is always located at its right place at the side of the occupant's head securely due to a difference in a body size of occupants. Namely, since there is a limit to a perfect design of the inflatable airbag with a large volume as a practical matter, there is a possibility that an airbag which is designed appropriately for relatively small-size occupants so as to be located at a whole side of such occupant's head would not necessarily suit to relatively large-size occupants, providing so limited protection that the airbag is located at only a lower part of the side of such occupant's head.

Further, in the event of the side impact of the vehicle, the occupant's chest firstly moves toward the vehicle side body and then the occupant's head moves toward the vehicle side body. Accordingly, it is needed to adjust an inflation completion timing of the inflatable airbag such that the inflated airbag can be firstly located at the side of the occupant's chest, and at the same time or a little later it can be located at the side of the occupant's head. Further, it is also needed to adjust an inflation sustaining period of the inflatable airbag such that an airbag portion for protecting the occupant's head can maintain its inflation for a longer period than an airbag portion protecting for the occupant's chest.

However, it is difficult to apply such arrangements to the inflatable airbag formed as one unit airbag basically, which are disclosed in the above-described patent publications, i.e., corresponding to the occupant-size difference, and adjusting appropriate inflation completion timing and inflation sustaining period for the airbag portion for the occupant's head and the airbag portion of the airbag for the occupant's chest, respectively.

EP 0 999 101 discloses a side-impact airbag comprising a torso-protecting airbag and a head-protecting airbag, wherein the head-protecting airbag substantially inflates in an upward direction.

US 5 556 128 discloses a side impact airbag according to the preamble of claim 1 comprising a torso-protecting portion provided with a vent and a head-protecting portion provided with a vent, and inflation delay components to provide a delay of the head compartment inflation either in the form of a seam line aperture, a gas line comprising a check valve or a delay element for providing a staggered ignition of two charge packages.

US 5 913 536 discloses an air bag module to be mounted in a vehicle seat back and comprising a thorax portion, a neck portion and a head portion. A pair of vents is provided in the head portion, and an inflation delay component is arranged in a vehicle seat to provide a delay of the head compartment inflation in the form of an inflator having a guide pin slidably received in a guide slot of a support tube.

US 6 065 772 discloses a side collision air bag system comprising first and second chambers separated by a separator which extends along a vehicle front-to-rear direction.

DE 196 46 698 A1 discloses a side collision airbag device comprising a separate airbag for the thorax of a passenger and having an inflator and a further airbag for the head of a passenger having an inflator.

WO 02/100 690 A1 discloses a side impact airbag having an upper compartment and lower compartment, wherein a vent is provided in the upper compartment.

It is the object of the invention to provide a side impact airbag device which has a minimum of components and which can improve protection of a passengers head.

This object is fulfilled by an air bag device having the features disclosed in claim 1, by a use of such airbag according to claim 24 and by a vehicle seat according to claim 25. Preferred embodiments are defined in the dependent claims.

Accordingly, since the inflatable airbag is configured of the head-protection portion and the torso-protection portion which are formed separately or as separately inflatable portion, it should be easy to adjust appropriately an inflation completion timing, an inflation sustaining period or the like for each of the head-protection portion and the torso-protection portion of the airbag. Further, since these separate portions of airbag are configured such that the volume of the head-protection portion is greater than that of the torso-protection portion at the time their inflation is completed, it can be achieved to place the head-protection portion with a greater volume at a substantially whole side of the occupant's head securely regardless of the occupant's body size. As a result, an appropriate and secure protection of the occupant can be attained.

According to a preferred embodiment of the invention, the airbag is arranged to inflate forward from a side portion of the seat back, and a lower part of the head-protection portion and an upper part of the torso-protection portion are connected by a tether such that a forward inflation-force of the torso-protection portion generated in the inflated condition is conveyed to the head-protection portion substantially through the tether.

In general, the head-protection portion of airbag tends to inflate upward, due to a folded arrangement of airbag, an large space existing above the seat back and beside the vehicle side body and so on. According to the preferred embodiment, however, such forward inflation-force of the torso-protection portion, which is generated strongly by nature in the inflated condition, is conveyed to the head-protection portion through the tether. Accordingly, it can be achieved that the head-protection portion of airbag is moved and located immediately substantially forward the side of the occupant's head so as to substantially cover a whole area of the occupant's head.

According to an another preferred embodiment of the invention, the airbag is arranged to inflate forward from a side portion of the seat back, and a lower part of the head-protection portion and an upper part of the torso-protection portion are connected by a tether such that an upward inflation of the head-protection portion in the inflated condition is substantially suppressed by the torso-protection portion through the tether.

The head-protection portion of airbag tends to inflate upward, as described above. However, according to the another embodiment, the torso-protection portion located below of the airbag substantially suppresses the upward movement of the head-protection portion through the tether. Accordingly, it can be achieved that the head-protection portion of airbag is located at the side of the occupant's head securely.

The head-protection portion and the torso-protection portion are configured such that an inflation sustaining period of the head-protection portion is longer than that of the torso-protection portion in the inflated condition.

Accordingly, the head-protection portion of airbag can be maintained in its inflated condition even after the torso-protection portion has become deflated. Thus, appropriated protection can be achieved.

A least one of the head-protection portion and the torso-protection portion comprises a vent hole formed thereat, and the configuration that the inflation sustaining period of the head-protection portion is longer than that of the torso-protection portion in the inflated condition is adjusted by the vent hole.

Accordingly, a use of the vent hole can make the inflation sustaining period of the head-protection portion longer than that of the torso-protection portion in the inflated condition.

Still further preferably, at least one of the head-protection portion and the torso-protection portion comprises a material coated on an inside surface thereof, and the configuration that the inflation sustaining period of the head-protection portion is longer than that of the torso-protection portion in the inflated condition is adjusted by the coated material.

Accordingly, a use of the coated material influencing gas permeablility of the inflatable airbag can make the inflation sustaining period of the head-protection portion longer than that of the torso-protection portion in the inflated condition.

Preferably, the airbag device further comprising an inflation assist device that promotes a forward movement of the inflation of the head-protection portion and substantially suppresses an upward movement thereof at the beginning of its inflation.

Accordingly, the head-protection portion of airbag which tends to move upward can be directed substantially forward. Thus, it can be achieved that the head-protection portion of airbag is located at the side of the occupant's head securely.

Further preferably, the head-protection portion and the torso-protection portion are configured so as to complete their inflation at substantially the same time.

Accordingly, respective inflation completion timing of the head-protection portion and the torso-protection portion can be set at their appropriate timing.

Still further preferably, the head-protection portion and the torso-protection portion are configured such that an inflation completion timing of the torso-protection portion is earlier than that of the head-protection portion.

Accordingly, respective inflation completion timing of the head-protection portion and the torso-protection portion can be set at their more appropriate timing.

Preferably, the inflator is formed as a common one for supplying the gas to both of the head-protection portion and the torso-protection portion, and there is provided a distributor for distributing the gas generated by the common inflator to the head-protection portion and the torso-protection portion.

Accordingly, since the inflator, which is generally expensive, for the head-protection portion and the torso-protection portion is formed as one common inflator, a relatively low-cost airbag device can be obtained. Further, since the distributor adjusts properly a gas supply to the head-protection portion and the torso-protection portion, a desirable gas supply to the both airbag portions can be attained by even one inflator.

Further preferably, the distributor comprises or is of a pipe shape which is connected to the inflator.

Accordingly, the gas generated by the inflator can be securely supplied to respective airbag portions without an unnecessarily large space for disposing the distributor.

Still further preferably, the pipe-shaped distributor is made of cloth which is integral or unitary with the inflatable airbag comprising the head-protection portion and the torso-protection portion.

Accordingly, the distributor can be made of cloth simply and cheaply, and further it should be easy to make it integral or unitary with the airbag portions.

Further preferably, the distributor adjusts an amount of gas blowing into the head-protection portion and the torso-protection portion from the inflator respectively.

Accordingly, a use of the distributor can provide proper inflation characteristics of respective airbag portions.

Still further preferably, the distributor comprises a first outlet opening formed in the head-protection portion and a second outlet opening formed in the torso-protection portion, and the amount of gas blowing into the head-protection portion and the torso-protection portion is adjusted by each of opening area of the first and second outlet openings.

Accordingly to the airbag device of the fourteenth aspect of the invention, a simple method of adjusting each of opening area of the first and second outlet openings can make the amount of gas blowing into respective airbag portions desirable.

Preferably, the distributor comprises a first outlet opening formed in the head-protection portion and a second outlet opening formed in the torso-protection portion, and the amount of gas blowing into the head-protection portion and the torso-protection portion is adjusted by the number of each of the first and second outlet openings formed.

Accordingly, a simple method of adjusting the number of each of the first and second outlets formed can make the amount of gas blowing into respective airbag portions desirable.

Further preferably, the amount of gas blowing into the head-protection portion and the torso-protection portion is adjusted such that the amount of gas blowing into the head-protection portion is greater than that of gas blowing into the torso-protection portion.

Accordingly, the inflation of the head-protection portion of the airbag can be attained securely, resulting in a secure protection of the occupant's head.

Still further preferably, an adjustment of the gas distribution by the distributor is configured such that the head-protection portion and the torso-protection portion complete their inflation at substantially the same time.

Accordingly, setting respective inflation completion timing of head-protection portion and the torso-protection portion at substantially the same time can improve further a secure protection of the occupant's head.

Preferably, an adjustment of the gas distribution by the distributor is configured such that the head-protection portion and the torso-protection portion complete their inflation at substantially the same time, and the head-protection portion and the torso-protection portion are configured such that an inflation sustaining period of the head-protection portion is longer than that of the torso-protection portion in the inflated condition.

Accordingly, a secure protection of the occupant's head can be attained regardless of the occupant's body size.

Further preferably, wherein the head-protection portion, the torso-protection portion, the inflator and the distributor are disposed within the seat back respectively, and the head-protection portion and the torso-protection portion are arranged to inflate substantially forward from a side portion of the seat back.

Accordingly, mounting of these respective members to provide proper one-unit disposition and compactness thereof can be attained.

Still further preferably, the inflator is located in either one of the head-protection portion and the torso-protection portion, without being located in the other one, and the distributor connected to the inflator extends into the other one.

Accordingly, the inflator can be located in either one of the airbag portions, having a secure gas supply to the other one.

Preferably, the inflator is comprised of a first inflator for supplying the gas to the head-protection portion and a second inflator for supplying the gas to the torso-protection portion, which are formed separately, and the first and second inflators have gas supply characteristics different from each other.

Accordingly, since separate inflators for the head-protection portion and the torso-protection portion are provided, respective gas supply characteristics of the airbag portions can be set properly and thereby desirable inflation completion timing can be obtained securely for the respective airbag portions.

Further preferably, an amount of gas supply of the first inflator is greater than that of the second inflator.

Accordingly, proper setting of the inflation completion timing can be obtained without delaying the inflation completion timing of the head-protection portion, resulting in an appropriate protection of the occupant's head.

Still further preferably, an adjustment of the gas supply characteristics of the first and second inflators is configured such that the head-protection portion and the torso-protection portion complete their inflation at substantially the same time.

Accordingly, especially secure protection of the occupant's head can be obtained.

Still further preferably, an adjustment of the gas supply characteristics of the first and second inflators is configured such that an inflation completion timing of the torso-protection portion is earlier than that of the head-protection portion.

Accordingly, the inflation completion timing for respective airbag portions can be set at the most appropriate timing.

According to the invention, there is further provided the use of an airbag device according to the invention or a preferred embodiment thereoffor a vehicle of an open car or convertible type..

Accordingly, an appropriate airbag device can be provided with respect to the open-car type of vehicle, an upper portion of which has an open structure, and, therefore, an appropriate protection of the occupant's head is needed strongly.

Further according to the invention, there is provided a seat for a vehicle comprising an airbag device according to the invention or a preferred embodiment thereof.

Other features, aspects, and advantage of the present invention will become apparent from the following description of the present invention which refers to the accompanying drawings. It should be understood that even though embodiments are separately described, single features thereof may be combined to additional embodiments.
FIG. 1 is a perspective view of an essential part of a vehicle which is equipped with an airbag device according to the first embodiment of the present invention.
FIG. 2 is a side view of an essential part of a head-protection portion and a torso-protection portion of an inflated airbag, when viewed from an outside of a vehicle body.
FIG. 3 is an elevation view of respective portions of the inflated airbag shown in FIG. 2, when viewed from a front side of the vehicle.
FIG. 4 is a block diagram for showing an exemplified control system.
FIG. 5 is a side view for showing an exemplified airbag having a vent hole and a coated layer.
FIG. 6 is a sectional view taken on line X6-X6 of FIG. 5.
FIG. 7 is a schematic side view of an essential part of an airbag device according to the second embodiment of the present invention.
FIG. 8 is a schematic side view of an essential part of an airbag device according to the third embodiment of the present invention.
FIG. 9 is a schematic side view of an essential part of an airbag device according to the fourth embodiment of the present invention.
FIG. 10 is a schematic side view of an essential part of an airbag device according to the fifth embodiment of the present invention.
FIG. 11 is a side view of an essential part of a head-protection portion and a torso-protection portion of an inflated airbag according to the sixth embodiment of the present invention, when viewed from an outside of a vehicle body.
FIG. 12 is a block diagram for showing an exemplified control system according to the sixth embodiment of the present invention.

Hereinafter, preferred embodiments of the present invention will be described with the reference to the accompanying drawings.

### EMBODIMENT 1

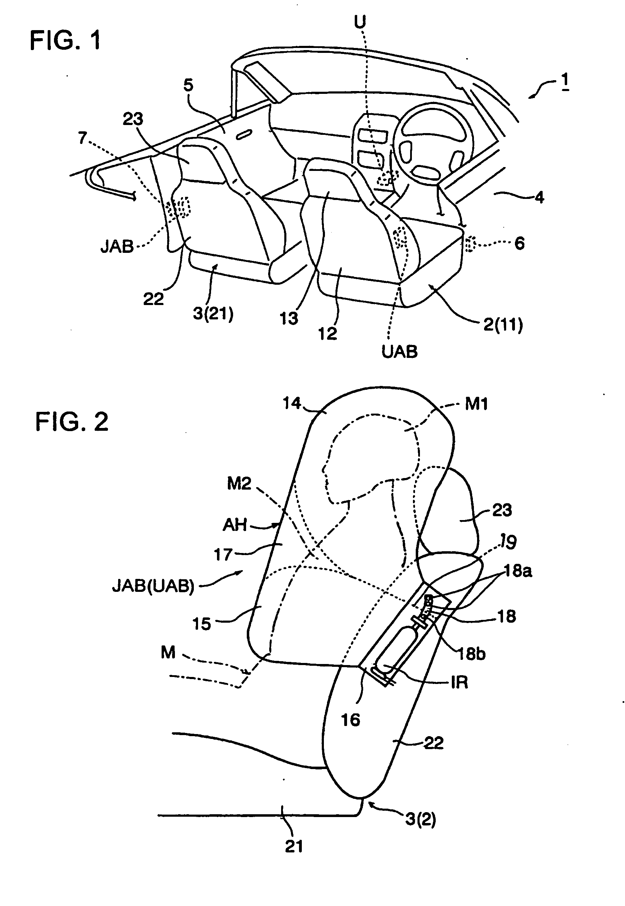

In FIG. 1, a reference numeral 1 denotes a vehicle of an open-car or convertible type, and a driver seat and a passenger seat are denoted by reference numerals 2 and 3, respectively. A side door, which constitutes part of a vehicle side body, disposed at the driver seat's side is denoted by a reference numeral 4, while a side door disposed at the passenger seat's side is denoted by a reference numeral 5. The driver seat 2, as well known, comprises a set cushion 11, a seat back 12 and a headrest 13. Likewise, the passenger seat 3 comprises a set cushion 21, a seat back 22 and a headrest 23.

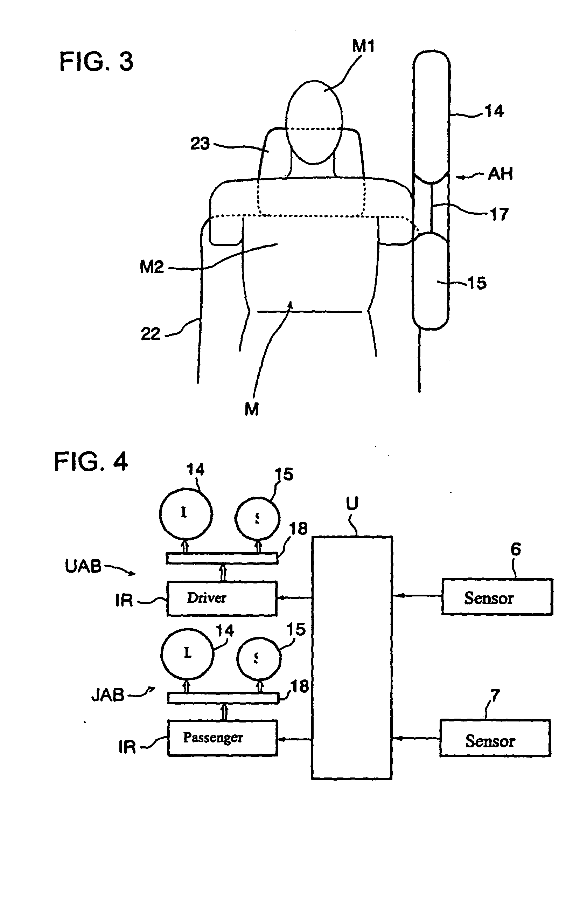

An airbag device (side airbag device) UAB is to be mounted within the seat back 12 of the driver seat 2, while an airbag device (side airbag device) JAB is mounted within the seat back 22 of the passenger seat 3. Both of the airbag devices UAB and JAB have substantially the same or symmetrical structure, thus hereinafter only the airbag device for passenger seat JAB will be described in detail referring to FIGS. 2 and 3.

The airbag device JAB includes an inflatable airbag AH and an inflator IR for generating gas pressure. The inflatable airbag AH comprises a head-protection portion 14 and a torso-protection portion 15, which are formed as separately inflatable portions, i.e. which have enclosed volumen substantially not being in fluid connection with each other which may be inflated by one common inflator IR, as described later, or by separate inflators. The head-protection portion 14 is arranged so as to be located at or near a side of a head M1 of an occupant (passenger) M sitting on the passenger seat 3 and to have a large enough volume to substantially laterally cover the occupant's head M1 wholly from the outside of the vehicle in its inflated condition (see FIGS. 2 and 3). Namely, the head-protection portion 14 is arranged such that it inflates at an upper portion of a space formed between the occupant (passenger) and the side door 5 at the passenger seat's side and its upper end extends beyond the set back 22 and the headrest 23. A front end of the inflated head-protection portion 14 extends forward beyond the occupant's head M1 with respect to a normal seating position of the passenger M in the passenger seat 3 (see FIG. 2).

Furthermore, the torso-protection portion 15 is arranged so as to be located at a side of at least a chest M2 of the occupant (passenger) M sitting on the passenger seat 3 in the normal seating position and to have a large enough volume to substantially laterally cover the occupant's chest M2 wholly from the outside of the vehicle in its inflated condition (as seen from the side of the side door 5). Namely, the torso-protection portion 15 is arranged such that it inflates at a lower portion of a space formed between the occupant (passenger) and the side door 5 at the passenger seat's side, more specifically substantially at a middle or intermediate position of the seat back 22 in a vertical direction of the vehicle 1. Herein, the torso-protection portion 15 may be configured so as to extend toward and/or at least partly laterally cover a lumbar portion of the occupant M to protect the occupant's lumbar portion as well. The head-protection portion 14 and the torso-protection portion 15 are configured such that a volume (maximum volume) of the head-protection portion 14 is greater than that of the torso-protection portion 15 at the time their inflation is completed. For instance, the maximum volume of the head-protection portion 14 is configured so as to be about 40 to about 100% larger than that of the torso-protection portion 15. (In FIG. 4, a letter "L" means "Large" volume, and a letter "S" means "Small" volume of the respective airbag portions 14, 15.)

The airbag portions 14, 15 are folded up or collapsed respectively and then mounted within the seat back 22. When the inflator IR is activated, the airbag portions 14, 15 receive gas pressure generated by the inflator IR, and break or tear a weak portion 16 formed at a side surface of the seat back 22, and then inflate at least partly outward from the seat back 22.

In FIGS. 1 and 4, a side impact of the vehicle is detected by sensors 6 and 7 which are disposed in either of the side door 4, 5. A controller U including a micro computer receives outputs of the sensors 6, 7 and activates the inflator IR, as described above, based on the outputs of the sensors 6, 7.

The torso-protection portion of airbag 15 inflates substantially forward. The head-protection portion of airbag 14 also inflates substantially forward, but it tends to also inflate substantially upward. Namely, the inflatable head-protection portion 14 is folded up in the vertical direction of the seat so as to inflates upward beyond an upper edge of the seat back 22, and accordingly it tends to inflate substantially upward. Further, the weak portion 16, which is formed at a side surface of the seat back 22 and through which the airbag portions 14, 15 come out, is located at a lower position than the inflated head-protection portion 14, and there exists a relatively large space formed above the weak portion 16. Accordingly, the head-protection portion of airbag 14 intends to inflate upward for this reason as well.

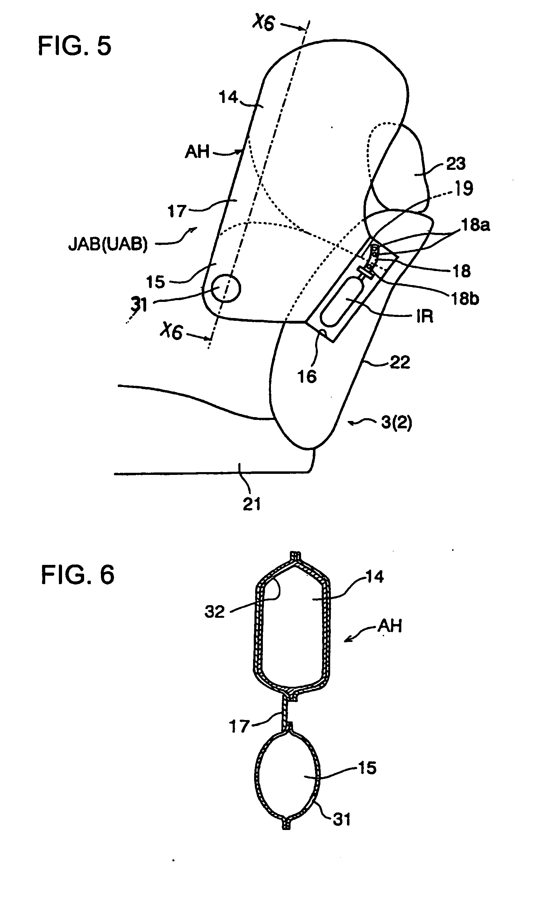

Further, there is provided a tether 17 to make the head-protection portion of airbag 14 inflate forward to the utmost, suppressing its upward inflation. The tether 17, for example, is of a sheet shape, and it connects an lower portion (especially, a front-lower portion) of the head-protection portion of airbag 14 with an upper portion (especially, a front-upper portion) of the torso-protection portion 15. The tether 17 may be formed by bonding or sewing or connecting the sheet material forming the airbag device UAB/JAB and may preferably include a strengthening means such as a thin plastic strip or band. Alternatively, the tether 17 may be formed by bonding a separate material to the respective head-protection portion of airbag 14 and the torso-protection portion 15 (see FIG. 6). The tether 17 can convey a forward inflation-force of the torso-protection portion of airbag 15, which tends to inflate forward by nature, to the head-protection portion 14. Thereby, the head-protection portion 14 comes to have a tendency to inflate substantially forward. As a result, the head-protection portion of airbag 14 can inflate so as to extend substantially forward and/or upward of the occupant's head M1 as quickly as possible.

Further, the tether 17 can also avoid a situation where the head-protection portion 14 extends upward unnecessarily. Namely, a movement of the head-protection portion 14 which would extend upward unnecessarily is effectively suppressed by the torso-protection portion 15 through the tether 17.

The head-protection portion 14 and the torso-protection portion 15 are inflated by one common inflator IR. Namely, the inflator IR itself is to be disposed (mounted or fixed) in either one of airbag portions (torso-protection portion of airbag 15, in the present embodiment), not in the other airbag portion. As shown in FIG. 2, a distributing pipe 18 as a distributor, through which the generated gas is supplied, is connected to the inflator IR at one end thereof. The other end of the distributing pipe 18 extends in the head-protection portion 14 and the torso-protection portion15 respectively. More specifically, the distributing pipe 18 penetrates a partition wall 19 with a gastightness, which preferably corresponds to an upper wall or portion of the torso-protection portion 15 and a lower wall or portion of the head-protection portion 14 respectively in their inflated condition, and an end portion thereof extends into the head-protection portion 14. Herein, the upper wall of the torso-protection portion 15 and the lower wall of the head-protection portion 14 may be formed separately, or either one of their walls may be also used for the other.

The above-described distributing pipe 18 is provided with one or more outlet openings for gas pressure (first outlet opening) 18a which are open in the head-protection portion 14 and one or more another outlet openings for gas pressure (second outlet opening) 18b which is open in the torso-protection portion 15. The total opening area of the outlet openings 18a for the head-protection portion 14 is configured so as to be much greater than that of the outlet opening 18b for the torso-protection portion 15. In the present embodiment, there is provided a difference in the total opening area with a larger number of the outlet openings 18a than the outlet opening 18b having the same opening area of each of respective outlet openings. This structure can give priority to a gas-pressure supply to the head-protection portion 14. Accordingly, a necessary time to complete the inflation of the head-protection portion 14 having with a larger volume becomes almost the same as a necessary time to complete the inflation of the torso-protection portion 15 having with a smaller volume. Herein, the distributing pipe 18 may be made of metal or resin (especially, rigid resin).

Herein, it is preferable that an inflation sustaining period of the head-protection portion 14 is longer than that of the torso-protection portion 15. Namely, it is preferable that the head-protection portion 14 keep its inflated state even after the torso-protection portion 15 has deflated. Accordingly, a gas relief of inflated airbag portions 14, 15 is adjusted appropriately, e.g. by suitably choosing a gas permeability or porosity of the sheet material of the airbag and/or by suitably providing one or more openings or vent holes in the airbag material, as described hereinafter.

With respect to such gas-pressure relief of respective airbag portions 14, 15, an exemplified method shown in FIGS. 5 and 6 can be also applied. Namely, a vent hole 31 is formed at the torso-protection portion 15, while e.g. no vent hole (or a smaller vent hole) is formed at the head-protection portion 14. Also, the head-protection portion 14 comprises a material coated on an inside surface thereof (coating layer is denoted by a reference numeral 32), which can make a gas-pressure relief (leak) per unit area of the head-protection portion 14 smaller. Meanwhile, the torso-protection portion 15 comprises no material coated on an inside surface thereof. The vent hole 31 and the coating layer 32 make the gas-pressure relief (or gas-pressure relief rate) from the head-protection portion 14 delayed compared with the torso-protection portion 15, so that the inflation sustaining period of the head-protection portion 14 can be maintained long enough. Herein, in FIG. 6, each thickness of airbag material of the airbag portions 14, 15 and the coating layer 32 is illustrated on an enlarged scale in order to manifest their existence.

A proper combination of the vent hole 31 and the coating layer 32 can also make the inflation sustaining period of the head-protection portion 14 longer than that of the torso-protection portion 15. For example, the coating layer 32 is provided only at the head-protection portion 14, while no vent hole is provided at either of the airbag portions 14, 15. Or, the vent hole 31 is provided only at the torso-protection portion 15, while no coating layer 32 is provided at the both airbag portions 14, 15. Further, there may be other possible combinations, such as that the vent holes 31 are provided at the both airbag portions 14, 15 and the opening area of them are different from each other, the coating layers 32 are provided at the both airbag portions 14, 15 and the thickness of them are different from each other.

### EMBODIMENT 2

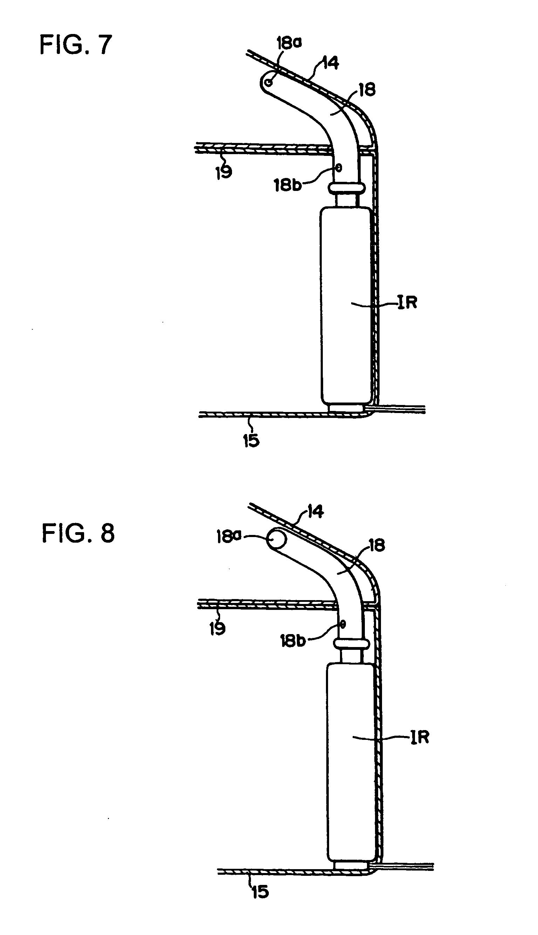

FIG. 7 shows an airbag device according to a second preferred embodiment of the present invention. The similar or same structure elements as the first preferred embodiment are denoted by the same reference numerals, and duplicated description about them will be omitted hereinafter (other embodiments described hereinafter will be dealt in the same way). In the embodiment shown in FIG. 7 which corresponds to FIG. 5, the followings are similar or the same as the first preferred embodiment: the inflator IR is disposed only in the torso-protection portion 15; one end of the distributing pipe 18 is connected to the inflator IR and the other end hereof penetrates the partition wall and extends in the head-protection portion 14; and the distributing pipe 18 is provided with the first outlet opening 18a open in the head-protection portion 14 and the second outlet opening 18b open in the torso-protection portion 15.

In the embodiment of FIG. 7, both of the first and second outlet openings 18a, 18b have the substantially same area and the same number of outlet opening (i.e., one each, in the present embodiment). In other word, the total opening area of the first outlet opening 18a preferably is the same as that of the second outlet opening 18b. Accordingly, in the event that the volume of the head-protection portion 14 is configured to be larger than that of the torso-protection portion 15 at the time their inflation are completed, like the first embodiment, the inflation completion timing of the head-protection portion 14 is a little delayed, compared to the torso-protection portion 15.

### EMBODIMENT 3

FIG. 8 shows an airbag device according to a third preferred embodiment of the present invention, which corresponds to FIG. 7. In the present embodiment of FIG. 8, the number of the first outlet opening(s) 18a is the same as that of the second outlet opening(s) 18b (i.e., preferably one each, in the present embodiment). However, the opening area of the first outlet opening 18a is larger than that of the second outlet opening 18b. Accordingly, even if the volume of the head-protection portion 14 is configured to be larger than that of the torso-protection portion 15 at the time their inflation is completed, like the embodiment of FIG. 5, the inflation completion timing of the head-protection portion 14 becomes almost the same as that of the torso-protection portion 15.

### EMBODIMENT 4

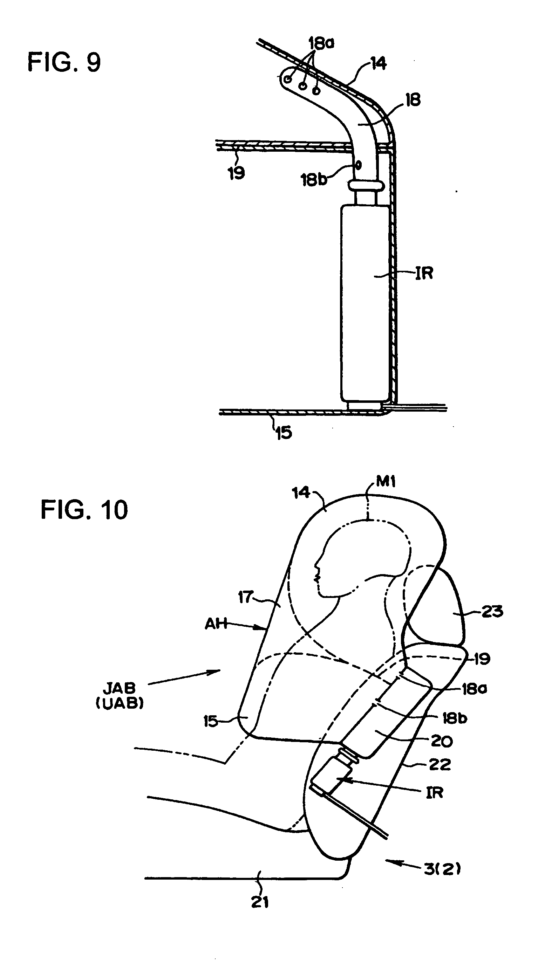

FIG. 9 shows an airbag device according to a fourth preferred embodiment of the present invention, which corresponds to FIG. 7. In the present embodiment, although the opening area of each of the first outlet openings 18a is the same as that of the second outlet opening 18b, the number of the first outlet openings 18a is larger than that of the second outlet opening 18b. Accordingly, even if the volume of the head-protection portion 14 is configured to be larger than that of the torso-protection portion 15 at the time their inflation is completed, like the embodiment of FIG. 5, the inflation completion timing of the head-protection portion 14 becomes almost the same as that of the torso-protection portion 15.

As described above, inflation characteristics, especially the inflation completion timing of the of the head-protection portion 14 and the torso-protection portion 15 can be made desirable by adjusting the total opening area of each of the first and second outlet openings 18a, 18b. Of course, the adjustment of the total opening area of these outlet openings 18a, 18b should be done based on gas supply characteristics (especially gas volume) of the inflator IR, respective airbag volumes of the head-protection portion 14 and the torso-protection portion 15 and the like.

### EMBODIMENT 5

FIG. 10 shows an airbag device according to a fifth preferred embodiment of the present invention. A distributor 20 which is preferably made of cloth or flexible material is used as a distributor in the present embodiment, instead of the distributing pipe 18. The distributor 20 is integrally or unitarily formed with the airbag portions 14, 15 and it becomes a substantially cylindrical shape having its longer length preferably substantially in the vertical direction when it is inflated. Namely, an upper end of the distributor 20 is integral or unitary with a rear end of the head-protection portion 14, and a first outlet opening 18a which is open in the head-protection portion 14 is formed at the upper end of the distributor 20. Meanwhile, a lower end of the distributor 20 is integral or unitary with a rear end of the torso-protection portion 15, and a second outlet opening 18b which is open in the torso-protection portion 15 is formed at the lower end of the distributor 20.

An inflator IR is disposed preferably substantially below the distributor 20, and an upper end of the inflator IR is coupled to the lower end of the distributor 20. In the present embodiment, opening area and the number of each of the outlet openings 18a, 18b are configured to be the same as each other, resulting in the substantially same total opening area of the outlet openings 18a, 18b. As described above, however, the outlet openings 18a, 18b may be configured to have their different opening area and/or number respectively, resulting in different total opening area of the outlet openings 18a, 18b. Further, the inflator IR may be disposed at any other places than that shown in FIG. 10, such as behind or within the distributor 20, in one of the airbag portions, and the like.

Since the distributor 20 is made of cloth or flexible material (preferably of the same or similar cloth or material as the head-protection portion 14 and/or the torso-protection portion 15), the present embodiment shown in FIG. 10 is of advantage to cost and/or weight reduction or the like. Further, it can be folded within the seat back in un-inflated condition, therefore it has also the advantage of a compact mounting.

### EMBODIMENT 6

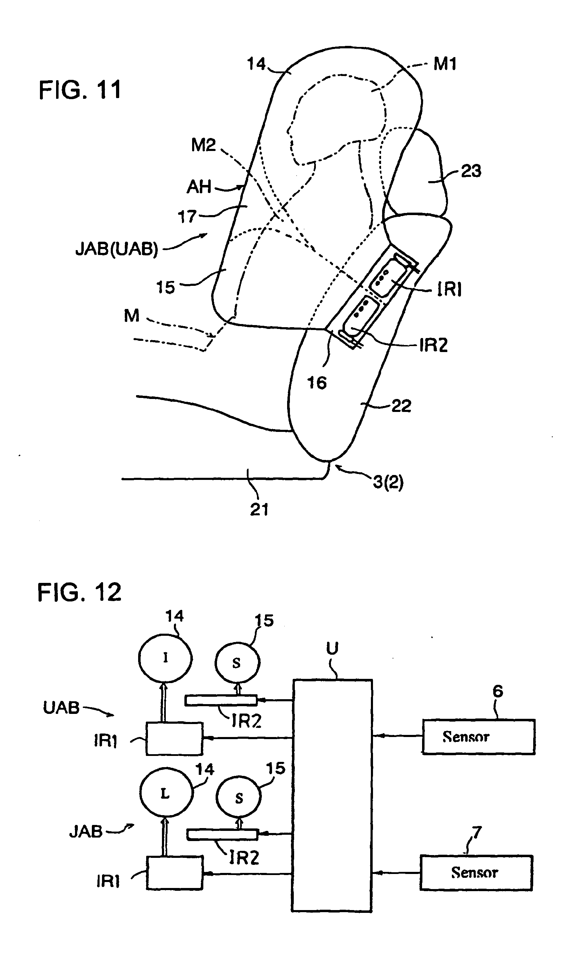

FIGS. 11, 12 show an airbag device according to a sixth preferred embodiment of the present invention, in which an inflator is comprised of a first inflator for supplying gas to the head-protection portion 14 of the airbag and a second inflator for supplying gas to the torso-protection portion 15 of the airbag.

Namely, there are provided a first inflator IR1 and a second inflator IR2, which generate inflating fluid or gas (gas pressure) and preferably are formed separately. The first inflator IR1 is provided for the head-protection portion of airbag 14 and inflates the airbag portion 14 by its being activated. The second inflator IR2 is provided for the torso-protection portion of airbag 15 and inflates the airbag portion 15 by its being activated. Herein, the both airbag portions 14, 15 inflate and expand out of the seat back 22, braking a weak portion 16 formed on a side face of the seat back 22 which is located at a side of the side door 5. Herein, as shown in FIG. 12, these inflators IR1, IR2 are also activated by impact sensors 6, 7 and a controller U, like the first embodiment (FIG. 4).

The two inflators IR1, IR2 are formed so as to have gas supply characteristics, especially an amount of gas supply, which is preferably different from each other. In the present embodiment, an amount of gas supply of the first inflator IR1 is greater than that of the second inflator IR2. Namely, the volume of the head-protection portion 14 is configured to be larger than that of the torso-protection portion 15 at the time their inflation is completed. Thus, the inflation completion timing of the head-protection portion 14 is a little delayed compared to the torso-protection portion 15 because of based on the above-described arrangement of gas supply amount by the two inflators IR1, IR2. In this case, an arrangement of the same amount of gas supply by the two inflators IR1, IR2 might cause an unnecessarily delayed (too-much delayed) inflation completion timing of the head-protection portion 14 compared to the torso-protection portion 15.

Premising that the volume of the head-protection portion 14 preferably is configured to be larger than that of the torso-protection portion 15 at the time their inflation is completed, gas supply characteristics, especially an amount of gas supply, of the respective inflators IR1, IR2 may be configured as follows. Namely, each gas supply characteristics, especially the amount of gas supply, of the inflators IR1, IR2 preferably is set differently so that the inflation completion timing of the head-protection portion 14 can be almost the same as that of the torso-protection portion 15. (In this case, in the event that the gas supply amount of the second inflator IR2 is set at the same as that of the present embodiment, the gas supply amount of the first inflator IR1 should be set at a larger one than that of the present embodiment. This is the same situation in setting them so that the inflation completion timing of the head-protection portion 14 can be earlier than that of the torso-protection portion 15.)

The present invention is not limited to the present embodiments. The vehicle to which the present invention is applied is not limited to the above-described open-car or convertible type of vehicle.

The present invention can be applied to any other types of vehicle. Further, the seat to which the present invention can be applied is not only a front seat but a rear seat.

An outlet through which the airbag comes out may be formed at a front face of side portion of the seat back instead of the side face of the seat back at outside of the vehicle.

Additionally, respective outlets for the head-protection portion 14 and the torso-protection portion 15 may be formed separately.

Respective rear end portions of the head-protection portion 14 and the torso-protection portion 15 may be connected integrally or unitary with each other, for example, at the portion of the partition wall 19, or formed separately.

The inflation completion timing of the head-protection portion of airbag 14 may be configured so as to be a little earlier than that of the torso-protection portion of airbag 15.

Further, the above-described gas inflation characteristics of the inflators IR1, IR2 includes gas inflation pressure and the like other than the above-described gas inflation amount. Accordingly, at least one of these may be set differently between the head-protection portion of airbag 14 and the torso-protection portion of airbag 15.

## Claims

1. An airbag device for a vehicle, comprising:
an inflatable airbag (AH) to be mounted within a seat back (12; 22) of a seat (2; 3) for an occupant (M) and arranged to inflate substantially forward and between the occupant (M) and a vehicle side body (4; 5) in the event of a side impact of the vehicle (1);
an inflator (IR; IR1, IR2) responsive to the side impact of the vehicle (1) for generating gas to inflate said airbag (AH),
wherein said airbag (AH) comprises a head-protection portion (14) arranged to be located at a side of a head (M1) of the occupant (M) and a torso-protection portion (15) arranged to be located at a side of at least part of a chest (M2) of the occupant (M) in the inflated condition, and said head-protection portion (14) and said torso-protection portion (15) are formed as separately inflatable portions and configured such that a volume of said head-protection portion (14) is greater than that of said torso-protection portion (15) at the time their inflation is completed,
**characterized in that**
a vent hole (31) formed at the torso-protection portion (15) is configured such that an inflation sustaining period of said head protection portion (15) is longer than an inflation sustaining period of said torso-protection portion (15), and
said head-protection portion (14) and said torso-protection portion (15) are configured such that a volume of said head-protection portion (14) is greater than that of said torso-protection portion (15) at the time their inflation is completed.

2. The air bag device for a vehicle of claim 1, wherein the airbag (AH) is configured such that the head-protection portion (14) is kept in its inflated condition even after the torso-protection portion (15) has become deflated.

3. The airbag device for a vehicle of claim 1 or 2, wherein said airbag (AH) is arranged to inflate forward from a side portion of the seat back (12; 22), and a lower part of said head-protection portion (14) and an upper part of said torso-protection portion (15) are connected by a tether (17) such that a forward inflation-force of said torso-protection portion (15) generated in the inflated condition is conveyed to said head-protection portion (14) substantially through the tether (17).

4. The airbag device for a vehicle of one of the preceding claims, wherein said airbag (AH) is arranged to inflate forward from a side portion of the seat back (12; 22), and a lower part of said head-protection portion (14) and an upper part of said torso-protection portion (15) are connected by a tether (17) such that an upward inflation of said head-protection portion (14) in the inflated condition is suppressed by said torso-protection portion (15) through the tether (17).

5. The airbag device for a vehicle of claim 3 or 4, wherein at least one of said head-protection portion (14) and said torso-protection portion (15) comprises a material (32) coated on an inside surface thereof, and said configuration that the inflation sustaining period of the head-protection portion (14) is longer than that of the torso-protection portion (15) in the inflated condition is adjusted by the coated material (32).

6. The airbag device for a vehicle of one of the preceding claims, further comprising an inflation assist device (17) that promotes a forward movement of the inflation of said head-protection portion (14) and substantially suppresses an upward movement thereof (14) at the beginning of its inflation.

7. The airbag device for a vehicle of one or more of the preceding claims,
wherein said head-protection portion (14) and said torso-protection portion (15) are configured so as to complete their inflation at substantially the same time.

8. The airbag device for a vehicle of one or more of the preceding claims 1 to 6, wherein said head-protection portion (14) and said torso-protection portion (15) are configured such that an inflation completion timing of said torso-protection portion (15) is earlier than that of said head-protection portion (14).

9. The airbag device for a vehicle of one or more of the preceding claims,
wherein said inflator is formed as a common one (IR) for supplying the gas to both of said head-protection portion (14) and said torso-protection portion (15), and there is provided a distributor (18; 20) for distributing the gas generated by said common inflator (IR) to said head-protection portion (14) and said torso-protection portion (15).

10. The airbag device for a vehicle of claim 9, wherein said distributor (18; 20) comprises a pipe shape which is connected to said inflator (IR)

11. The airbag device for a vehicle of claim 10, wherein said pipe-shaped distributor (20) is made of cloth which is integral or unitary with said inflatable airbag (AH) comprising said head-protection portion (14) and said torso-protection portion (15).

12. The airbag device for a vehicle of claim 9 to 11, wherein said distributor (18; 20) adjusts an amount of gas blowing into said head-protection portion (14) and said torso-protection portion (15) from said inflator (IR) respectively.

13. The airbag device for a vehicle of claim 12, wherein said distributor (18; 20) comprises a first outlet opening (18a) formed in said head-protection portion (14) and a second outlet opening (18b) formed in said torso-protection portion (15), and said amount of gas blowing into said head-protection portion (14) and said torso-protection portion (15) is adjusted by each of opening area of said first and second outlet openings (18a, 18b).

14. The airbag device for a vehicle of claim 12, wherein said distributor (18; 20) comprises a first outlet opening (18a) formed in said head-protection portion (14) and a second outlet opening (18b) formed in said torso-protection portion (15), and said amount of gas blowing into said head-protection portion (14) and said torso-protection portion (15) is adjusted by the number of each of said first and second , outlet openings (18a, 18b) formed.

15. The airbag device for a vehicle of claim 12 to 14, wherein said amount of gas blowing into said head-protection portion (14) and said torso-protection portion (15) is adjusted such that the amount of gas blowing into said head-protection portion (14) is greater than that of gas blowing into said torso-protection portion (15).

16. The airbag device for a vehicle of one or more of the preceding claims 10 to 15, wherein an adjustment of the gas distribution by said distributor (18; 20) is configured such that said head-protection portion (14) and said torso-protection portion (15) complete their inflation at substantially the same time.

17. The airbag device for a vehicle of claim 16, wherein said head-protection portion (14) and said torso-protection portion (15) are configured such that an inflation sustaining period of said head-protection portion (14) is longer than that of said torso-protection portion (15) in the inflated condition.

18. The airbag device for a vehicle of one or more of the preceding claims 9 to 17, wherein said head-protection portion (14), said torso-protection portion (15), said inflator (IR) and said distributor (18; 20) are disposed within the seat back (12; 22) respectively, and said head-protection portion (14) and said torso-protection portion (15) are arranged to inflate substantially forward from a side portion of the seat back (12; 22).

19. The airbag device for a vehicle of claim 18, wherein said inflator (IR) is located in either one of said head-protection portion (14) and said torso-protection portion (15), without being located in the other one, and said distributor (18; 20) connected to said inflator (IR) extends into the other one.

20. The airbag device for a vehicle of one or more of the preceding claims 1 to 8, wherein said inflator is comprised of a first inflator (IR1) for supplying the gas to said head-protection portion (14) and a second inflator (IR2) for supplying the gas to said torso-protection portion (15), which are formed separately, and said first and second inflators (IR1, IR2) have gas supply characteristics different from each other.

21. The airbag device for a vehicle of claim 20, wherein an amount of gas supply of said first inflator (IR1) is greater than that of said second inflator (IR2).

22. The airbag device for a vehicle of claim 20 or 21, wherein an adjustment of the gas supply characteristics of said first and second inflators (IR1, IR2) is configured such that said head-protection portion (14) and said torso-protection portion (15) complete their inflation at substantially the same time.

23. The airbag device for a vehicle of claim 20 or 21, wherein an adjustment of the gas supply characteristics of said first and second inflators (IR1, IR2) is configured such that an inflation completion timing of said torso-protection portion (14) is earlier than that of said head-protection portion (15).

24. Use of an airbag device for a vehicle of any one of the preceding claims, for a vehicle of an open car type.

25. A seat (4; 5) for a vehicle comprising an airbag device according to one of the preceding claims 1 to 23.

## Patentansprüche

1. Gassack bzw. Airbag bzw. Luftsack bzw. -Vorrichtung für ein Fahrzeug, umfassend:
einen aufblasbaren Gassack (AH), welcher innerhalb einer Sitz- bzw. Rückenlehne (12; 22) eines Sitzes (2; 3) für einen Insassen (M) zu montieren ist und angeordnet ist, um sich im wesentlichen nach vorne und zwischen dem Insassen (M) und einem Fahrzeugseitenkörper (4; 5) in dem Fall eines Seitenaufpralls des Fahrzeugs (1) aufzublasen;
eine Aufblaseinrichtung (IR; IR1, IR2), welche auf den Seitenaufprall des Fahrzeugs (1) anspricht, um Gas zu erzeugen bzw. zu generieren, um den Gassack (AH) aufzublasen,
wobei der Gassack (AH) einen Kopfschutzabschnitt (14), welcher angeordnet ist, um an einer Seite eines Kopfs (M1) des Insassen (M) lokalisiert bzw. positioniert zu sein, und einen Torso- bzw. Rumpfschutzabschnitt (15) umfaßt, welcher angeordnet ist, um an der Seite wenigstens eines Brustkorbs (M2) des Insassen (M) lokalisiert bzw. positioniert zu sein, und zwar in dem aufgeblasenen Zustand, und der Kopfschutzabschnitt (14) und der Rumpfschutzabschnitt (15) als getrennt aufblasbare Abschnitte ausgebildet und konfiguriert sind, so daß ein Volumen des Kopfschutzabschnitts (14) größer als dasjenige des Rumpfschutzabschnitts (15) zu der Zeit ist, wo ihr Aufblasen abgeschlossen ist,
**dadurch gekennzeichnet, daß**
ein Entlüftungsloch bzw. -öffnung (31), welches an dem Rumpfschutzabschnitt (15) ausgebildet ist, derart konfiguriert ist, daß eine ein Aufblasen aufrecht erhaltende Periode des Kopfschutzabschnitts (15) länger als eine ein Aufblasen aufrecht erhaltende Periode des Rumpfschutzabschnitts (15) ist, und
der Kopfschutzabschnitt (14) und der Rumpfschutzabschnitt (15) derart konfiguriert sind, daß ein Volumen des Kopfschutzabschnitts (14) größer als dasjenige des Rumpfschutzabschnitts (15) zu der Zeit ist, wo ihr Aufblasen abgeschlossen ist.

2. Gassack für ein Fahrzeug nach Anspruch 1, wobei der Gassack (AH) derart konfiguriert ist, daß der Kopfschutzabschnitt (14) in seinem aufgeblasenen Zustand beibehalten ist, selbst nachdem der Rumpfschutzabschnitt (15) entlüftet bzw. abgelassen wurde.

3. Gassack für ein Fahrzeug nach Anspruch 1 oder 2, wobei der Gassack (AH) angeordnet ist, um sich nach vorne von einem Seitenabschnitt der Sitzlehne (12; 22) aufzublasen, und ein unteres Teil des Kopfschutzabschnitts (14) und ein oberes Teil des Rumpfschutzabschnitts (15) durch ein Seil bzw. Halteseil bzw. Spannseil (17) verbunden sind, so daß eine vorwärts gerichtete Aufblaskraft des Rumpfschutzabschnitts (15), welche in dem aufgeblasenen Zustand erzeugt wird, auf den Kopfschutzabschnitt (14) im wesentlichen durch das Seil (17) übertragen wird.

4. Gassack für ein Fahrzeug nach einem der vorangehenden Ansprüche, wobei der Gassack (AH) angeordnet ist, um sich nach vorne von einem Seitenabschnitt der Sitzlehne (12; 22) aufzublasen, und ein unteres Teil des Kopfschutzabschnitts (14) und ein oberes Teil des Rumpfschutzabschnitts (15) durch ein Seil bzw. Halteseil bzw. Spannseil (17) verbunden sind, so daß ein nach oben gerichtetes Aufblasen des Kopfschutzabschnitts (14) in dem aufgeblasenen Zustand durch den Rumpfschutzabschnitt (15) durch das Seil (17) unterdrückt ist bzw. wird.

5. Gassack für ein Fahrzeug nach Anspruch 3 oder 4, wobei wenigstens einer des Kopfschutzabschnitts (14) und des Rumpfschutzabschnitts (15) ein Material (32) umfaßt, welches auf einer innenliegenden Oberfläche bzw. -fläche davon beschichtet ist bzw. welches eine innenliegende Oberfläche bzw. Fläche davon überzieht, und die Konfiguration, daß die ein Aufblasen aufrecht erhaltende Periode des Kopfschutzabschnitts (14) länger als jene des Rumpfschutzabschnitts (15) in dem aufgeblasenen Zustand ist, durch das beschichtete Material (32) eingestellt ist bzw. wird.

6. Gassack für ein Fahrzeug nach einem der vorangehenden Ansprüche, weiterhin umfassend eine Aufblasunterstützungsvorrichtung (17), welche eine Vorwärtsbewegung des Aufblasens des Kopfschutzabschnitts (14) unterstützt und im wesentlichen eine Aufwärtsbewegung davon (14) am Beginn seines Aufblasens unterdrückt.

7. Gassack für ein Fahrzeug nach einem oder mehreren der vorangehenden Ansprüche, wobei der Kopfschutzabschnitt (14) und der Rumpfschutzabschnitt (15) konfiguriert sind, um ihr Aufblasen im wesentlichen zur selben Zeit zu beenden bzw. abzuschließen bzw. kompletieren.

8. Gassack für ein Fahrzeug nach einem oder mehreren der vorangehenden Ansprüche 1 bis 6, wobei der Kopfschutzabschnitt (14) und der Rumpfschutzabschnitt (15) derart konfiguriert sind, daß ein Aufblasbeendigungszeitpunkt des Rumpfschutzabschnitts (15) früher als jener des Kopfschutzabschnitts (14) ist.

9. Gassack für ein Fahrzeug nach einem oder mehreren der vorangehenden Ansprüche, wobei die Aufblaseinrichtung als eine gemeinsame (IR) für ein Zuführen des Gases sowohl zu dem Kopfschutzabschnitt (14) als auch zu dem Rumpfschutzabschnitt (15) ausgebildet ist, und dort eine Verteileinrichtung (18; 20) zum Verteilen des Gases, welches durch die gemeinsame Aufblaseinrichtung (IR) erzeugt bzw. generiert ist bzw. wird, zu dem Kopfschutzabschnitt (14) und dem Rumpfschutzabschnitt (15) zur Verfügung gestellt ist.

10. Gassack für ein Fahrzeug nach Anspruch 9, wobei die Verteileinrichtung (18; 20) eine Rohrform bzw. -gestalt umfaßt, welche mit der Aufblaseinrichtung (IR) verbunden ist.

11. Gassack für ein Fahrzeug nach Anspruch 10, wobei die rohrförmige Verteileinrichtung (20) aus Stoff bzw. Tuch hergestellt ist, welches(r) integral oder einstückig mit dem aufblasbaren Gassack (AH) ist, welcher den Kopfschutzabschnitt (14) und den Rumpfschutzabschnitt (15) umfaßt.

12. Gassack für ein Fahrzeug nach Anspruch 9 bis 11, wobei die Verteileinrichtung (18; 20) eine Menge an Gas einstellt bzw. anpaßt, welche in den Kopfschutzabschnitt (14) und den Rumpfschutzabschnitt (15) jeweils von der Aufblaseinrichtung (IR) bläst bzw. strömt.

13. Gassack für ein Fahrzeug nach Anspruch 12, wobei die Verteileinrichtung (18; 20) eine erste Auslaßöffnung (18a), welche in dem Kopfschutzabschnitt (14) ausgebildet ist, und eine zweite Auslaßöffnung (18b) umfaßt, welche in dem Rumpfschutzabschnitt (15) ausgebildet ist, und die Menge an Gas, welche in den Kopfschutzabschnitt (14) und den Rumpfschutzabschnitt (15) strömt, durch jede Öffnungsfläche der ersten und zweiten Auslaßöffnungen (18a, 18b) eingestellt bzw. angepaßt ist bzw. wird.

14. Gassack für ein Fahrzeug nach Anspruch 12, wobei die Verteileinrichtung (18; 20) eine erste Auslaßöffnung (18a), welche in dem Kopfschutzabschnitt (14) ausgebildet ist, und eine zweite Auslaßöffnung (18b) umfaßt, welche in dem Rumpfschutzabschnitt (15) ausgebildet ist, und die Menge an Gas, welche in den Kopfschutzabschnitt (14) und den Rumpfschutzabschnitt (15) strömt, durch die Anzahl von jeder der ersten und zweiten ausgebildeten Auslaßöffnung (18a, 18b) eingestellt bzw. angepaßt ist bzw. wird.

15. Gassack für ein Fahrzeug nach Anspruch 12 bis 14, wobei die Menge an Gas, welche in den Kopfschutzabschnitt (14) und den Rumpfschutzabschnitt (15) strömt, derart eingestellt bzw. angepaßt ist, daß die Menge an Gas, welche in den Kopfschutzabschnitt (14) strömt, größer ist als jene an Gas, welche in den Rumpfschutzabschnitt (15) strömt.

16. Gassack für ein Fahrzeug nach einem der vorangehenden Ansprüche 10 bis 15, wobei eine Einstellung bzw ein Anpassen der Gasverteilung durch die Verteileinrichtung (18; 20) derart konfiguriert ist, daß der Kopfschutzabschnitt (14) und der Rumpfschutzabschnitt (15) ihr Aufblasen im wesentlichen zur selben Zeit beenden.

17. Gassack für ein Fahrzeug nach Anspruch 16, wobei der Kopfschutzabschnitt (14) und der Rumpfschutzabschnitt (15) derart konfiguriert sind, daß eine ein Aufblasen aufrecht erhaltende Periode des Kopfschutzabschnitts (14) länger als jene des Rumpfschutzabschnitts (15) in dem aufgeblasenen Zustand ist.

18. Gassack für ein Fahrzeug nach einem oder mehreren der vorangehenden Ansprüche 9 bis 17, wobei der Kopfschutzabschnitt (14), der Rumpfschutzabschnitt (15), die Aufblaseinrichtung (IR) und die Verteileinrichtung (18; 20) jeweils innerhalb der Sitzlehne (12; 22) angeordnet sind bzw. bereitgestellt sind bzw. verteilt sind, und der Kopfschutzabschnitt (14) und der Rumpfschutzabschnitt (15) angeordnet sind, um sich im wesentlichen nach vorne von einem Seitenabschnitt der Sitzlehne (12; 22) aufzublasen.

19. Gassack für ein Fahrzeug nach Anspruch 18, wobei die Aufblaseinrichtung (IR) in einem des Kopfschutzabschnitts (14) und des Rumpfschutzabschnitts (15) angeordnet ist, ohne in dem anderen angeordnet zu sein, und sich die Verteileinrichtung (18; 20), welche mit der Aufblaseinrichtung (IR) verbunden ist, in den anderen erstreckt.

20. Gassack für ein Fahrzeug nach einem oder mehreren der vorangehenden Ansprüche 1 bis 8, wobei die Aufblaseinrichtung aus einer ersten Aufblaseinrichtung (IR1) zum Zuführen des Gases zu dem Kopfschutzabschnitt (14) und einer zweiten Aufblaseinrichtung (IR2) zum Zuführen des Gases zu dem Rumpfschutzabschnitt (15) besteht, welche getrennt ausgebildet sind, und daß die erste und zweite Aufblaseinrichtung (IR1, IR2) Gaszufuhrcharakteristika bzw. -eigenschaften verschieden voneinander aufweisen.

21. Gassack für ein Fahrzeug nach Anspruch 20, wobei eine Menge einer Gaszufuhr der ersten Aufblaseinrichtung (IR1) größer als jene der zweiten Aufblaseinrichtung (IR2) ist.

22. Gassack für ein Fahrzeug nach Anspruch 20 oder 21, wobei eine Einstellung der Gaszufuhrcharakteristika der ersten und zweiten Aufblaseinrichtung (IR1, IR2) derart konfiguriert bzw. ausgebildet ist, daß der Kopfschutzabschnitt (14) und der Rumpfschutzabschnitt (15) ihr Aufblasen im wesentlichen zur selben Zeit beenden.

23. Gassack für ein Fahrzeug nach Anspruch 20 oder 21, wobei eine Einstellung bzw. ein Anpassen der Gaszufuhrcharakteristika der ersten und zweiten Aufblaseinrichtung (IR1, IR2) derart konfiguriert ist, daß ein Aufblasbeendigungszeitpunkt des Rumpfschutzabschnitts (14) früher als jener des Kopfschutzabschnitts (15) ist.

24. Verwendung eines Gassacks bzw. Luftsacks bzw. Airbags bzw. -Vorrichtung für ein Fahrzeug nach einem der vorangehenden Ansprüche für ein Fahrzeug eines offenen Fahrzeugstyps bzw. Autotyps bzw. Cabriolets.

25. Sitz (4; 5) für ein Fahrzeug, umfassend einen Airbag bzw. Gassack bzw. Luftsack bzw. eine Airbag- bzw. Gassack- bzw. Luftsack-Vorrichtung nach einem der vorangehenden Ansprüche 1 bis 23.

## Revendications

1. Dispositif à airbag pour un véhicule comprenant :
un airbag gonflable (AH) devant être monté à l'intérieur d'un dossier de siège (12 ; 22) d'un siège (2 ; 3) pour un occupant (M) et agencé de manière à gonfler sensiblement vers l'avant et entre l'occupant (M) et une carrosserie latérale de véhicule (4 ; 5) dans le cas d'un impact latéral du véhicule (1) ;
un gonfleur (IR ; IR1, IR2) sensible à l'impact latéral du véhicule (1) pour la génération du gaz afin de gonfler ledit airbag (AH),
dans lequel ledit airbag (AH) comprend une partie de protection de la tête (14) agencée de manière à être placée sur un côté d'une tête (M1) de l'occupant (M) et une partie de protection du torse (15) agencée de manière à être placée sur un côté d'au moins une partie d'une cage thoracique (M2) de l'occupant (M) dans l'état gonflé, et dans lequel ladite partie de protection de la tête (14) et ladite partie de protection du torse (15) sont formées comme parties gonflables séparément et sont configurées de telle sorte qu'un volume de ladite partie de protection de la tête (14) est plus grand que celui de ladite partie de protection du torse (15) au moment où leur gonflage est terminé,
**caractérisé en ce que :**
un trou de purge (31) formé sur la partie de protection du torse (15) est configuré de telle sorte qu'une période de soutien du gonflage de ladite partie de protection de la tête (15) est plus longue qu'une période de soutien du gonflage de ladite partie de protection du torse (15) ; et
ladite partie de protection de la tête (14) et ladite partie de protection du torse (15) sont configurées de telle sorte qu'un volume de ladite partie de protection de la tête (14) est plus grand que celui de ladite partie de protection du torse (15) au moment où leur gonflage est terminé.

2. Dispositif à airbag pour un véhicule selon la revendication 1, dans lequel l'airbag (AH) est configuré de telle sorte que la partie de protection de la tête (14) est gardée dans son état gonflé même après que la partie de protection du torse (15) se soit dégonflée.

3. Dispositif à airbag pour un véhicule selon l'une ou l'autre des revendications 1 et 2, dans lequel ledit airbag (AH) est agencé pour gonfler vers l'avant depuis une partie latérale du dossier de siège (12 ; 22), et dans lequel une partie inférieure de ladite partie de protection de la tête (14) et une partie supérieure de ladite partie de protection du torse (15) sont reliées par une amarre (17) de telle sorte qu'une force de gonflage vers l'avant de ladite partie de protection du torse (15) générée dans l'état gonflé est convoyée vers ladite partie de protection de la tête (14) essentiellement par l'intermédiaire de l'amarre (17).

4. Dispositif à airbag pour un véhicule selon l'une des revendications précédentes, dans lequel ledit airbag (AH) est agencé pour gonfler vers l'avant depuis une partie latérale du dossier de siège (12 ; 22), et dans lequel une partie inférieure de ladite partie de protection de la tête (14) et une partie supérieure de ladite partie de protection du torse (15) sont reliées par une amarre (17) de telle sorte qu'un gonflage vers le haut de ladite partie de protection de la tête (14) dans l'état gonflé est supprimé par ladite partie de protection du torse (15) au moyen de l'amarre (17).

5. Dispositif à airbag pour un véhicule selon l'une ou l'autre des revendications 3 et 4, dans lequel au moins une protection parmi ladite partie de protection de la tête (14) et ladite partie de protection du torse (15) comprend un matériau (32) enduit sur une surface intérieure de celle-ci, et dans lequel ladite configuration - que la période de soutien du gonflage de la partie de protection de la tête (14) est plus longue que celle de la partie de protection du torse (15) dans l'état gonflé - est ajustée par le matériau enduit (32).

6. Dispositif à airbag pour un véhicule selon l'une des revendications précédentes, comprenant en outre un dispositif d'assistance au gonflage (17) qui stimule un mouvement vers l'avant du gonflage de ladite partie de protection de la tête (14) et qui supprime sensiblement un mouvement vers le haut de celle-ci (14) au début de son gonflage.

7. Dispositif à airbag pour un véhicule selon l'une ou plusieurs des revendications précédentes, dans lequel ladite partie de protection de la tête (14) et ladite partie de protection du torse (15) sont configurées de manière à terminer leur gonflage sensiblement au même moment.

8. Dispositif à airbag pour un véhicule selon l'une ou plusieurs des revendications précédentes 1 à 6, dans lequel ladite partie de protection de la tête (14) et ladite partie de protection du torse (15) sont configurées de telle sorte qu'un moment de terminaison du gonflage de ladite partie de protection du torse (15) se produit plus tôt que celui de ladite partie de protection de la tête (14).

9. Dispositif à airbag pour un véhicule selon l'une ou plusieurs des revendications précédentes, dans lequel ledit gonfleur est formé comme un gonfleur commun (IR) pour apporter le gaz à la fois à ladite partie de protection de la tête (14) et à ladite partie de protection du torse (15), et dans lequel un distributeur (18 ; 20) est prévu pour distribuer le gaz généré par ledit gonfleur commun (IR) à ladite partie de protection de la tête (14) et à ladite partie de protection du torse (15).

10. Dispositif à airbag pour un véhicule selon la revendication 9, dans lequel ledit distributeur (18 ; 20) comprend une forme de conduite qui est reliée audit gonfleur (IR).

11. Dispositif à airbag pour un véhicule selon la revendication 10, dans lequel ledit distributeur en forme de conduite (20) est constitué d'étoffe qui fait partie intégrante ou unitaire avec ledit airbag gonflable (AH) comprenant ladite partie de protection de la tête (14) et ladite partie de protection du torse (15).

12. Dispositif à airbag pour un véhicule selon l'une des revendications 9 à 11, dans lequel ledit distributeur (18 ; 20) ajuste une quantité de gaz étant soufflée respectivement jusque dans ladite partie de protection de la tête (14) et jusque dans ladite partie de protection du torse (15) depuis ledit gonfleur (IR).

13. Dispositif à airbag pour un véhicule selon la revendication 12, dans lequel ledit distributeur (18 ; 20) comprend une première ouverture de sortie (18a) conformée dans ladite partie de protection de la tête (14) et une seconde ouverture de sortie (18b) conformée dans ladite partie de protection du torse (15), et dans lequel ladite quantité de gaz étant soufflée jusque dans ladite partie de protection de la tête (14) et jusque dans ladite partie de protection du torse (15) est ajustée par chacune des zones d'ouverture de ladite première et de ladite seconde ouverture de sortie (18a, 18b).

14. Dispositif à airbag pour un véhicule selon la revendication 12, dans lequel ledit distributeur (18 ; 20) comprend une première ouverture de sortie (18a) conformée dans ladite partie de protection de la tête (14) et une seconde ouverture de sortie (18b) conformée dans ladite partie de protection du torse (15), et dans lequel ladite quantité de gaz étant soufflée jusque dans ladite partie de protection de la tête (14) et jusque dans ladite partie de protection du torse (15) est ajustée par le nombre de chacune desdites premières et desdites secondes ouvertures de sortie (18a, 18b).

15. Dispositif à airbag pour un véhicule selon l'une des revendications 12 à 14, dans lequel ladite quantité de gaz étant soufflée jusque dans ladite partie de protection de la tête (14) et jusque dans ladite partie de protection du torse (15) est ajustée de telle sorte que la quantité de gaz étant soufflée jusque dans ladite partie de protection de la tête (14) est plus grande que la quantité de gaz étant soufflée jusque dans ladite partie de protection du torse (15).

16. Dispositif à airbag pour un véhicule selon l'une ou plusieurs des revendications précédentes 10 à 15, dans lequel un réglage de la distribution de gaz par ledit distributeur (18 ; 20) est configuré de telle sorte que ladite partie de protection de la tête (14) et ladite partie de protection du torse (15) terminent leur gonflage sensiblement au même moment.

17. Dispositif à airbag pour un véhicule selon la revendication 16, dans lequel ladite partie de protection de la tête (14) et ladite partie de protection du torse (15) sont configurées de telle sorte qu'une période de soutien du gonflage de ladite partie de protection de la tête (14) est plus longue que celle de ladite partie de protection du torse (15) dans l'état gonflé.

18. Dispositif à airbag pour un véhicule selon l'une ou plusieurs des revendications précédentes 9 à 17, dans lequel ladite partie de protection de la tête (14), ladite partie de protection du torse (15), ledit gonfleur (IR) et ledit distributeur (18 ; 20) sont disposés respectivement à l'intérieur du dossier de siège (12 ; 22), et dans lequel ladite partie de protection de la tête (14) et ladite partie de protection du torse (15) sont agencées pour gonfler sensiblement vers l'avant depuis une partie latérale du dossier de siège (12 ; 22).

19. Dispositif à airbag pour un véhicule selon la revendication 18, dans lequel ledit gonfleur (IR) est placé dans l'une des parties de protection parmi ladite partie de protection de la tête (14) et ladite partie de protection du torse (15), sans être placé dans l'autre des parties de protection, et dans lequel ledit distributeur (18 ; 20) relié audit gonfleur (IR) s'étend jusque dans l'autre des parties de protection.

20. Dispositif à airbag pour un véhicule selon l'une ou plusieurs des revendications précédentes 1 à 8, dans lequel ledit gonfleur est constitué d'un premier gonfleur (IR1) pour l'apport du gaz vers ladite partie de protection de la tête (14) et d'un second gonfleur (IR2) pour l'apport du gaz vers ladite partie de protection du torse (15), lesquels sont formés séparément, et dans lequel lesdits premier et second gonfleur (IR1, IR2) ont des caractéristiques d'apport de gaz qui diffèrent les unes des autres.

21. Dispositif à airbag pour un véhicule selon la revendication 20, dans lequel une quantité d'apport de gaz dudit premier gonfleur (IR1) est plus grande que celle dudit second gonfleur (IR2).

22. Dispositif à airbag pour un véhicule selon l'une ou l'autre des revendications 20 et 21, dans lequel un réglage des caractéristiques d'apport de gaz desdits premier et second gonfleur (IR1, IR2) est configuré de telle sorte que ladite partie de protection de la tête (14) et ladite partie de protection du torse (15) terminent leur gonflage sensiblement au même moment.

23. Dispositif à airbag pour un véhicule selon l'une ou l'autre des revendications 20 et 21, dans lequel un réglage des caractéristiques d'apport de gaz desdits premier et second gonfleur (IR1, IR2) est configuré de telle sorte qu'un moment de terminaison du gonflage de ladite partie de protection de la tête (14) se produit plus tôt que celui de ladite partie de protection du torse (15).

24. Utilisation d'un dispositif à airbag pour un véhicule selon l'une quelconque des revendications précédentes, pour un véhicule d'un type décapotable.

25. Siège (4 ; 5) pour un véhicule comprenant un dispositif à airbag conformément à l'une des revendications précédentes 1 à 23.
